(19) Europäisches Patentamt
European Patent Office
Office européen des brevets

(11) Veröffentlichungsnummer: **0 229 966**
**A1**

(12) # EUROPÄISCHE PATENTANMELDUNG

(21) Anmeldenummer: **86117003.3**

(22) Anmeldetag: **06.12.86**

(51) Int. Cl.⁴: **A 01 N 47/12**
// (A01N47/12, 43:56)

(30) Priorität: **17.12.85 CH 5372/85**

(43) Veröffentlichungstag der Anmeldung: **29.07.87**
**Patentblatt 87/31**

(84) Benannte Vertragsstaaten: **AT DE FR GB IT SE**

(71) Anmelder: **SIEGFRIED AKTIENGESELLSCHAFT,**
**CH-4800 Zofingen (CH)**

(72) Erfinder: **Meyer, Jacques, Obere Brühlstrasse 1,**
**CH-4800 Zofingen (CH)**

(74) Vertreter: **Schweizer, Rudolf, Hohwachtweg 5,**
**CH-4802 Strengelbach (CH)**

(54) **Verfahren zur Bekämpfung des Unkrauts in Nutzpflanzenkulturen und Mittel zur Durchführung des Verfahrens.**

(57) Die kombinierte Verwendung der beiden selektiv herbiziden Aktivstoffe S-(2-Chlorbenzyl)-N,N-diethyl-thiocarbamat und N-(2,6-Dimethylphenyl)-N-(1-pyrazolylmethyl)-chloracetamid führt zu überraschenden Synergie-Effekten; ein die beiden Stoffe enthaltendes Kombinationspräparat eignet sich namentlich zur Unkrautbekämpfung in Kartoffelkulturen.

EP 0 229 966 A1

Verfahren zur Bekämpfung des Unkrauts in Nutzpflanzenkulturen und Mittel zur Durchführung des Verfahrens.

---

Die Erfindung betrifft ein Verfahren zur Bekämpfung des Unkrauts in Nutzpflanzenkulturen, insbesondere beim Anbau von Kartoffeln, durch Ausbringen einer auf die Unkrautpopulation toxisch wirkenden, die Kulturpflanzen aber nicht beeinflussenden Menge herbizider Aktivsubstanzen auf die Kulturfläche.

Da das Auftreten bzw. Ueberhandnehmen von Unkraut, d.h. von konkurrierenden Begleitpflanzen, den Kulturpflanzen-Ertrag in unter Umständen entscheidendem Ausmasse beeinträchtigt, kann in der Landwirtschaft unter den heutigen wirtschaftlichen Verhältnissen auf die Unkrautbekämpfung mit agrochemischen Mitteln in der Regel nicht mehr verzichtet werden. Dabei ist man auf herbizide Substanzen angewiesen, welche bei geeigneter Dosierung die jeweilige Kulturpflanze nicht in feststellbarem Masse beeinträchtigen, die Entwicklung möglichst aller im jeweiligen Fall zu erwartenden Unkrautarten aber in möglichst weitgehendem Masse verhindern. Der Fachmann kennt eine bereits sehr gross gewordene Anzahl von Substanzen, welche diesen Anforderungen unter bestimmten Bedingungen mehr oderweniger gut entsprechen. Das Auftreten unerwünschter Pflanzen und deren Bekämpfung in landwirtschaftlichen Kulturen ist jedoch ein ungeheuer komplexes Phänomen, welches von einer kaum übersehbaren Vielzahl von Faktoren beeinflusst wird. Es seien hier nur erwähnt die von Region, Klima, Bodenbeschaffenheit, Witterungsverlauf, Kulturbedingungen etc. abhängige Zusammensetzung der Unkrautflora und die von den gleichen Faktoren beeinflusste Empfindlichkeit sowohl der einzelnen Unkrautarten als auch der unterschiedlichen Kulturpflanzen-Arten und -Sorten gegenüber der jeweils benützten herbiziden Substanz. Es ist offensichtlich, dass man bei diesen Gegebenheiten auf eine breite Auswahl verschiedenartiger herbizider Aktivsubstanzen angewiesen ist. Für deren Eignung fallen überdies die Probleme der Wirtschaftlichkeit, der Anwendungstechniken und der Umweltbelastung nicht weniger

stark ins Gewicht als die herbizide Wirksamkeit als solche. Daraus erklärt sich, dass für kaum einen Sektor des Pflanzenanbaus das Problem der Unkrautbekämpfung als abschliessend gelöst gelten kann und dass das Bedürfnis nach verbesserten Herbiziden unvermindert weiterbesteht. Anderseits wird die Entwicklung neuer Aktivsubstanzen und ihrer Einführung in die Praxis immer mehr erschwert durch die sich ständig erhöhenden behördlichen Anforderungen und durch die entsprechend zunehmenden Kosten für die langfristige Prüfung auf Umweltverträglichkeit, Abbaubarkeit, toxikologische und teratologische Unbedenklichkeit etc.

Mehr und mehr bemüht man sich daher, einen Ausweg zu finden über synergistische Kombinationen von bekannten und bereits eingehend geprüften Aktivsubstanzen, deren Unbedenklichkeit erwiesen ist. Die Resultate des Kombinierens unterschiedlicher herbizider Substanzen sind in aller Regel aber nicht voraussehbar. Theoretisch müssten sich dadurch Mischungen erhalten lassen, deren Eigenschaften sich aufgrund der Eigenschaften der einzelnen Komponenten voraussagen lassen. In der Praxis bringt aber jede Mischung von zwei oder mehreren herbiziden Aktivstoffen das Risiko einer unerwarteten Verstärkung nachteiliger Eigenschaften mit sich, beispielsweise eine erhöhte Schädigung der Kulturpflanzen. Daher gilt schon eine nur additive, d.h. eine nur in vorteilhaftem Sinne komplementäre Mischung unter Fachleuten bereits als "glückliche" Mischung, deren Wirkungsqualitäten nicht vorausgesehen werden konnten.

Das wünschenswerteste Ziel ist natürlich eine Kombination, deren Eigenschaften vorteilhafter sind als die Summe der Eigenschaften der einzelnen Aktivstoffe, d.h. eine über-additive oder sog. synergistische Kombination.

Ein solches Ziel konnte mit der vorliegenden Erfindung erreicht werden, nämlich durch kombinierte Verwendung der herbiziden Substanzen S-(2-Chlorbenzyl)-N,N-diethyl-thiocarbamat ("Aktivstoff I") und N-(2,6-Dimethylphenyl)-N-(1-pyrazolylmethyl)-chloracetamid ("Aktivstoff II").

Beide vorstehend genannten Substanzen sind für ihre herbizide Wirksamkeit bekannt und haben sich bezüglich Umweltbelastung als unbedenklich erwiesen.

**Der erfindungsgemäss als Komponente benützte "Aktivstoff I", d.h. das S-(2-Chlorbenzyl)-N,N-diethyl-thiocarbamat der Formel**

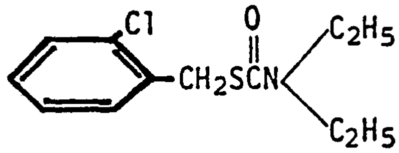

ist erhältlich nach dem beispielsweise in CH-PS 509'747 beschriebenen Verfahren und zeigt bei geringer Toxizität (LD 50 p.o. ca. 1850 mg/kg Maus) eine hohe Aktivität gegen zahlreiche monokotyle Unkräuter (Gramineen und Cyperaceen) in Verbindung mit einer im allgemeinen guten Toleranz gegenüber monokotylen Kulturpflanzen (Getreidearten). Gegenüber dikotylen (breitblättrigen) Unkrautarten ist die herbizide Aktivität dagegen im allgemeinen eher schwächer. Der Aktivstoff I ist daher schon in der Vergangenheit als Komponente von Mischpräparaten empfohlen worden, beispielsweise in US-PS 4'392'883 in Mischung mit einem Triazin. Auch bei Verwendung als Komponente von Mischpräparaten werden für diesen Aktivstoff I im allgemeinen Aufwandmengen von 4000 bis 5000 g/ha benötigt.

Der vorerwähnte "Aktivstoff II", d.h. das N-(2,6-Dimethylphenyl)-N-(1-pyrazolylmethyl)-chloracetamid der Formel

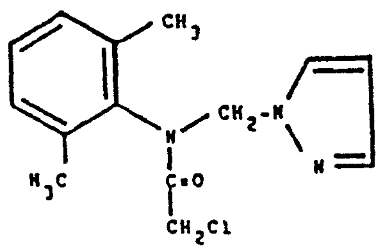

welches beispielsweise in DE-OS 27 42 583 beschrieben ist, zeigt bei ebenfalls geringer Toxizität (LD 50 p.o. 2150 mg/kg Ratte) eine gute Wirkung gegen ein recht breites Spektrum monokotyler und dikotyler Unkrautarten, aber wie alle selektiven Herbizide auch ausgeprägte Wirkungslücken bzw. Wirkungsschwächen gegenüber bestimmten problematischen Unkrautarten. Empfohlene Aufwandmengen liegen nach derzeitigem Wissensstand für die meisten Kulturen bei 1000 bis 1500 g Aktivstoff pro Hektar.

Bei beiden genannten Aktivstoffen können namentlich im oberen Bereich der erwähnten Aufwandmengen bei gewissen Kulturpflanzen bereits Schäden auftreten, d.h. die Toleranzbreite (Abstand zwischen der für einen befriedigenden Unkraut-Bekämpfungseffekt erforderlichen Dosierung und der Dosierung, bei welcher bereits phytotoxische Einwirkungen auf die Kulturpflanzen feststellbar werden) ist im allgemeinen nicht übermässig gross.

Der Versuch, die beiden genannten Aktivstoffe in Kombination zu verwenden, hat zum überraschenden Ergebnis geführt, dass nicht nur gewisse Wirkungslücken geschlossen werden dadurch, dass einzelne Unkrautarten, die gegenüber dem einen der Aktivstoffe relativ wenig empfindlich sind, vom andern Wirkstoff ausreichend erfasst werden, sondern dass problematische Unkrautarten, welche sich mit keinem der beiden je für sich allein eingesetzten Aktivstoffe zufriedenstellend bekämpfen lassen, mit einer geeigneten Kombination dieser Aktivstoffe in einem für die Praxis völlig ausreichendem Masse zurückgedrängt oder sogar ganz eliminiert werden können, und dies erst noch bei so stark erniedrigter Dosierung beider Aktivstoffe, dass das Risiko phytotoxischer Effekte auf Kulturpflanzen entscheidend verringert, die Toleranzbreite also deutlich verbessert wird.

Resultate von Versuchen, welche diese Bewertung stützen, sind in den drei nachstehenden Tabellen I, II und III wiedergegeben. Darin werden für die jeweiligen Unkraut-Species folgende Abkürzungen verwendet:

| | |
|---|---|
| AMARE | Amaranthus retroflexus L. |
| AVEFA | Avena fatua L. |
| CAPBP | Capsella bursa-pastoris (L.) Med. |
| CHEAL | Chenopodium album L. |
| CHEPO | Chenopodium polyspermum L. |
| DIGSA | Digitaria sanguinalis Scop. |
| ECHCG | Echinochloa crus-galli P.B. |
| GALAP | Galium aparine L. |
| LAMPU | Lamium purpureum L. |
| MATCH | Matricaria chamomilla L. |
| SORHA | Sorghum halepense (L.) Pers. |
| STEME | Stellaria media (L.) Vill. |

Der Tabelle I liegen orientierende Versuche zugrunde, welche im klimatisierten Gewächshaus durchgeführt wurden, wobei 7 repräsentative Unkrautarten und als Beispiel einer Kulturpflanze Raps benützt wurden. Unmittelbar nach dem Beschicken der Kunststofftöpfe mit dem Saatgut wurde (abge-

## TABELLE I

Vergleichs- und Optimierungsversuche unter Gewächshaus-Bedingungen

| Aktivstoffe und Aufwandmengen (g/ha) I | | II | Wirkung auf Testpflanzen (Bonitierungswert nach EWRC): RAPS | AVEFA | DIGSA | SORHA | AMARE | CHEAL | GALAP | MATCH |
|---|---|---|---|---|---|---|---|---|---|---|
| 4000 | | - | 6,2 | 6 | 3 | 1 | 2,5 | 1.8 | 3,5 | 7 |
| 3000 | | - | 7,5 | 6,3 | 3 | 1,5 | 5,3 | 2,8 | 5 | 6,8 |
| 2000 | | - | 7,7 | 8,5 | 4,5 | 4 | 6,8 | 3,5 | 8 | 9 |
| 1000 | | - | 9 | 9 | 9 | 9 | 9 | 9 | 9 | 9 |
| - | | 1000 | 7,5 | 7 | 1 | 9 | 5,3 | 4,8 | 5,8 | 5,5 |
| - | | 500 | 7,5 | 8 | 1 | 9 | 5,8 | 5,5 | 5,3 | 6 |
| - | | 250 | 9 | 9 | 5 | 9 | 6,5 | 6,3 | 7 | 6,5 |
| 3000 | + | 1000 | 6,2 | 3 | 1 | 1 | 1,8 | 1 | 2,5 | 2 |
| 3000 | + | 500 | 6,5 | 4 | 1 | 1 | 1,5 | 1,8 | 3,5 | 2,3 |
| 3000 | + | 250 | 7,7 | 6 | 1 | 1,5 | 3 | 2,3 | 4,8 | 3 |
| 2000 | + | 1000 | 9 | 3,5 | 1 | 2 | 2,3 | 2 | 3,8 | 2,8 |
| 2000 | + | 500 | 9 | 4,8 | 1 | 1,5 | 2,8 | 2,3 | 4,3 | 2,5 |
| 2000 | + | 250 | 9 | 5,8 | 1 | 1,5 | 2,8 | 2 | 6,8 | 2,8 |
| 1000 | + | 1000 | 9 | 4 | 1 | 1 | 1 | 1,8 | 3 | 2,3 |
| 1000 | + | 500 | 9 | 4 | 2 | 1 | 2 | 2 | 3 | 2,5 |
| 1000 | + | 250 | 9 | 7,5 | 3 | 7 | 4,8 | 4,5 | 6,5 | 6 |
| unbehandelt | | | 9 | 9 | 9 | 9 | 9 | 9 | 9 | 9 |

sehen von der unbehandelt bleibenden Kontrollserie) je eine Serie behandelt durch Aufsprühen einer wässrigen Suspension bzw. Emulsion, welche als Herbizid entweder nur den Aktivstoff I oder II in unterschiedlicher Menge oder beide Stoffe kombiniert in unterschiedlichen Mengen und Mengenverhältnissen enthielt. Die eingesetzten Aktivstoff-Mengen wurden umgerechnet auf die Aufwandmengen in Gramm Wirkstoff pro Hektar. Die Effekte wurden innert vier Wochen mehrmals begutachtet und protokolliert.

Die in der Tabelle I enthaltenen Wirkungsangaben wurden nach der Bonitierungs-Skala des European Weed Research Council (EWRC) bestimmt, wobei hier sowohl für Unkräuter wie auch für Kulturpflanze der Wert 1 der völligen Abtötung und der Wert 9 der völligen Wirkungslosigkeit zugeordnet wurde:

| | | | | |
|---|---|---|---|---|
| 1 | = | 100 | % | Wirkung |
| 2 | = | 97,5 | % | " |
| 3 | = | 95 | % | " |
| 4 | = | 90 | % | " |
| 5 | = | 85 | % | " |
| 6 | = | 75 | % | " |
| 7 | = | 65 | % | " |
| 8 | = | 32,5 | % | " |
| 9 | = | 0 | % | " |

Die Zahlenwerte der Tabelle I zeigen einerseits, dass Raps bei Behandlung mit 2000 g/ha Aktivstoff I sowie auch bei Behandlung mit 500 g/ha Aktivstoff II bereits deutlich geschädigt wurde, dass aber bei Anwendung von 2000 g/ha Aktivstoff I kombiniert mit 1000 g/ha Aktivstoff II eine Schädigung der Rapspflanzen ausblieb. Diesbezüglich liegt also ein Antidot- oder Desensibilisierungseffekt vor, der als ausgesprochen überraschend zu werten ist. Gegenüber den 7 Unkraut-Arten resultierte dagegen bei Anwendung von beispielsweise 4000 g/ha Aktivstoff I ein Durchschnittswert von 3,5 und bei Anwendung von 1000 g/ha Aktivstoff II ein Durchschnittswert von 5,5. Wenn dagegen die beiden Aktivstoffe kombiniert, aber mit nur je der Hälfte der eben genannten Aufwandmengen eingesetzt werden (d.h. mit 2000 g/ha Aktivstoff I und 500 g/ha Aktivstoff II), dann ergab sich überraschenderweise ein durchschnittlicher Schädigungswert von 2,7, ohne dass an den Rapspflanzen Schadsymptome auftraten.

Die Tabelle II zeigt Resultate von Versuchen, die im Freien, nämlich im schweizerischen Mittelland auf mittelschwerem sandigem Lehmboden durchgeführt wurden. Die hier wiedergegebenen Werte sind Prozent-Zahlen, die errechnet wurden aufgrund der Formel

$$\frac{AK - AB}{AK} \cdot 100$$

wobei AK die Individuenzahl der jeweiligen Unkraut-Art pro Flächeneinheit der unbehandelten Kontrollparzelle und AB die entsprechende Individuenzahl pro Flächeneinheit der jeweiligen behandelten Partelle bedeutet. Die Ermittlung der Wirkung erfolgte vier Wochen nach Behandlung.

## TABELLE II

Vergleichs- und Optimierungsversuche im Freiland

| Aktivstoffe und Aufwandmengen (g/ha) I | II | Unkrautbekämpfungs-Wirkung in % auf: CAPBP | CHEAL | CHEPO | GALAP | LAMPU | MATCH | ECHCG |
|---|---|---|---|---|---|---|---|---|
| 4000 | - | 100 | 87 | 88 | 93 | 95 | 94 | 79 |
| 3000 | - | 97 | 80 | 76 | 82 | 100 | 88 | 64 |
| 2000 | - | 55 | 67 | 45 | 65 | 88 | 43 | 39 |
| - | 1000 | 100 | 91 | 99 | 61 | 100 | 100 | 91 |
| - | 875 | 100 | 88 | 93 | 58 | 96 | 100 | 78 |
| - | 750 | 100 | 80 | 84 | 48 | 88 | 85 | 65 |
| 3000 + | 750 | 100 | 100 | 100 | 98 | 100 | 100 | 93 |
| 2000 + | 1000 | 100 | 100 | 100 | 95 | 100 | 100 | 96 |
| 2000 + | 750 | 100 | 100 | 100 | 90 | 100 | 100 | 89 |

Wenn aus Tabelle II als Beispiel die Wirkung auf Chenopodium album ("CHEAL") herausgegriffen wird, dann ergibt sich, dass mit 4000 g/ha Aktivstoff I ein Effekt von nur 87 % und mit 1000 g/ha Aktivstoff II ein solcher von nur 91 % resultierte. Bei kombinierter Anwendung einer um 50 % reduzierten Menge Aktivstoff I und einer um 25 % reduzierten Menge Aktivstoff II (also 2000 + 750 g/ha) liess sich überraschenderweise aber eine totale Elimination dieses hartnäckigen Unkrauts erzielen.

Tabelle III zeigt schliesslich die Ergebnisse eines Freilandversuches mit erfindungsgemässer Kombination der Aktivstoffe I und II in gleichbleibendem, als besonders vorteilhaft betrachteten Mengenverhältnis (2,9 : 1), aber unter Variierung der Gesamtaufwandmenge. Mit in der Tabelle enthalten sind die Resultate eines parallel dazu durchgeführten

0229966

Vergleichsversuches mit einem Unkrautbekämpfungsmittel, das gemäss Stand der Technik als Standard-Präparat für Kartoffelkulturen gilt, nämlich einem Kombinationspräparat von Pendimethalin und Monolinuron (Aufwandmengen: 1650 g/ha Pendimethalin plus 500 g/ha Monolinuron).

## TABELLE III

Vergleichsversuch im Freiland mit variierter Aufwandmenge

| Aktivstoffe und Aufwandmengen (g/ha) I + II | Unkrautbekämpfungs-Wirkung in % auf: CAPBP | CHEAL | GALAP | LAMPU | MATCH | STEME |
|---|---|---|---|---|---|---|
| 2000 + 689,6 | 100 | 90 | 89 | 100 | 100 | 99 |
| 2500 + 862 | 100 | 100 | 98 | 100 | 100 | 100 |
| 3000 + 1034,4 | 100 | 100 | 100 | 100 | 100 | 100 |
| Standard-Präparat | 100 | 100 | 78 | 100 | 100 | 100 |

Besonders augenfällig wird aus dieser Tabelle III die überlegene Wirksamkeit der erfindungsgemäss benützten Kombination bei der Bekämpfung von Galium aparine ("GALAP").

Die vorliegende Erfindung umfasst neben dem Verfahren zur Unkrautbekämpfung auch das der Durchführung des Verfahren dienende Mittel, m.a.W. ein selektives Unkrautbekämpfungsmittel, welches dadurch gekennzeichnet ist, dass es als herbizide Aktivsubstanzen S-(2-Chlorbenzyl)-N,N-diethylthiocarbamat (Aktivstoff I) und N-(2,6-Dimethylphenyl)-N-(1-pyrazolylmethyl)-chloracetamid (Aktivstoff II) enthält, vorzugsweise in einem Gewichtsverhältnis von 1:1 bis 10:1. Als besonders vorteilhaft wird ein Gewichtsverhältnis von 2:1 bis 4,3 : 1 betrachtet.

Dieses Mittel kann in grundsätzlich beliebiger Formulierung vorliegen; es kann insbesondere ein Dispersions- bzw. Suspensions- oder Emulsionskonzentrat sein, welches für die Anwendung in Wasser verdünnt und so auf die gewünschte Endkonzentration gebracht wird. Es kann bei geeigneter Wahl der Formulierungshilfsmittel im Prinzip jedoch auch eine direkt versprühbare Lösung, ein Spritzpulver, eine Paste, ein Stäubemittel, ein Streumittel, ein Granulat oder ein Mikrogranulat sein, wie solche für agrochemische Produkte üblich sind. Die Anwendungsform bzw. Formulierung richtet sich naturgemäss nach der gewünschten Art der Verwendung; wesentlich ist, dass damit eine feine, möglichst kolloidale Verteilung gewährleistet wird. Dies bedeutet, dass das Mittel ausser den Aktivstoffen in aller Regel geeignete Mengen entsprechender Hilfs- und Zusatzstoffe wie Lösungs-, Verdünnungs-, Dispergier-, Emulgier- und Netzmittel (Tenside), Trägerstoffe, Streckmittel, Haftvermittler und dgl. aufzuweisen hat, welche insbesondere etwa im Falle eine Granulates mengenmässig sogar stark überwiegen können.

Das Mittel der Erfindung kann demgemäss nach den üblichen, dem Fachmann geläufigen Formulierungstechniken hergestellt werden. Beispielsweise lässt sich ein erfindungsgemässes Dispersions- bzw. Emulsionskonzentrat ("flowable") in folgender Weise herstellen:

| | | |
|---|---|---|
| 518,7 | g | Aktivstoff I (technisches Produkt, Gehalt 96,4 %) |
| 181,5 | g | Aktivstoff II (technisches Produkt, Gehalt 95 %) |
| 10,0 | g | Ethylenglycol |
| 2,0 | g | Polyhexylethylenalkylether als nicht-ionogener Emulgator (Handelsprodukt ML-1156 der Firma I.C.I.) |
| 3,0 | g | Polyarylphenolethoxylat als kationischer Emulgator (Handelsprodukt Soprophor FL der Firma Rhône-Poulenc) |
| 0,5 | g | Gemisch von Sorbitan- und Sorbitanpolyoxyethylenat-Estern als nicht-ionogener Emulgator (Handelsprodukt Atplus 300 F der Firma Atlas Chem. Ind. N.V.) |
| 7,0 | g | anionische Heteropolysaccharide, erhalten durch Fermentation von Kohlehydraten mit Xanthomonas, als Verdickungsmittel (Handelsprodukt Rodophol 23 der Firma Rhône-Poulenc) |
| 0,1 | g | Entschäumungsmittel: Emulsion von 10 % EP 6500 Silicon (Handelsprodukt Silcolapse 5001 der Firma I.C.I.) |
| 0,05 | g | Konservierungsmittel / Biocid: Lösung von 20 % 1,2-Benzisothiazolin-3-on (Handelsprodukt Proxel GXL der Firma I.C.I.) |

werden mit Wasser unter intensivem Vermischen / Mahlen auf ein Volumen von 1 Liter gebracht und in einer Spezial-Kugelmühle "Perl Mill" homogenisiert.

Das resultierende Konzentrat wird zur Verwendung im erfindungsgemässen Verfahren mit Wasser beispielsweise auf das 100- bis 200-fache Volumen verdünnt; man erhält auf diese Weise 100 bis 200 Liter Spritzbrühe, welche gemäss bevorzugter Art der Durchführung des Verfahrens mit einem geeigneten Spritzgerät vor dem Auflaufen des Unkrauts auf 2000 $m^2$ Kulturfläche versprüht werden. Es sollen mit andern Worten für die Behandlung von 1 Hektar Kulturfläche zweckmässig etwa 500 bis 1000 Liter Spritzbrühe (erhalten aus 4 bis 6 und vorzugsweise 5 Liter Konzentrat mit einem Gehalt von etwa 500 g Aktivstoff I und etwa 170 bis 175 g Aktivstoff II pro Liter) verwendet werden.

Das Verfahren und das Mittel der Erfindung, welche für die selektive Unkrautbekämpfung in beliebigen Pflanzenkulturen in Betracht kommen, haben sich als besonders geeignet erwiesen für die Anwendung im Vorauflaufverfahren, d.h. vor der Keimung und Entwicklung des Unkrautes, beim Anbau von Kartoffeln.

0229966

## Patentansprüche

1. Verfahren zur Bekämpfung des Unkrauts in Nutzpflanzenkulturen, insbesondere beim Anbau von Kartoffeln, durch Ausbringen einer auf die Unkrautpopulation toxisch wirkenden, die Kulturpflanze aber nicht beeinflussenden Menge herbizider Aktivsubstanzen auf die Kulturfläche, gekennzeichnet durch kombinierte Verwendung der herbiziden Substanzen S-(2-Chlorbenzyl)-N,N-diethyl-thiocarbamat (Aktivstoff I) und N-(2,6-Dimethylphenyl)-N-(1-pyrazolylmethyl)-chloracetamid (Aktivstoff II).

2. Verfahren nach Anspruch 1, dadurch gekennzeichnet, dass die genannten Aktivstoffe in einem Gewichtsverhältnis von 1:1 bis 10:1 eingesetzt werden.

3. Verfahren nach Anspruch 2, dadurch gekennzeichnet, dass das Gewichtsverhältnis 2 : 1 bis 4,3 : 1 beträgt.

4. Verfahren nach einem der Ansprüche 1 bis 3, dadurch gekennzeichnet, dass man den genannten Aktivstoff I in einer Aufwandmenge von weniger als 4000 g und den genannten Aktivstoff II in einer Aufwandmenge von mindestens 250 g auf ein Hektar behandelter Kulturfläche gelangen lässt.

5. Verfahren nach Anspruch 4, dadurch gekennzeichnet, dass man den Aktivstoff II in einer Aufwandmenge von mindestens 500 g/ha einsetzt.

6. Verfahren nach Anspruch 5, dadurch gekennzeichnet, dass man den Aktivstoff I in einer Aufwandmenge von 2000 bis 3000 g/ha und den Aktivstoff II in einer Aufwandmenge von 700 bis 900 g/ha einsetzt.

7. Selektives Unkrautbekämpfungsmittel, dadurch gekennzeichnet, dass es als herbizide Aktivsubstanzen S-(2-Chlorbenzyl)-N,N-diethyl-thiocarbamat und N-(2,6-Dimethylphenyl)-N-(1-pyrazolylmethyl)-chloracetamid enthält.

8. Selektives Unkrautbekämpfungsmittel nach Anspruch 7, dadurch gekennzeichnet, dass es die beiden Aktivsubstanzen in einem Gewichtsverhältnis von 1:1 bis 10:1 enthält.

9. Selektives Unkrautbekämpfungsmittel nach Anspruch 8, dadurch gekennzeichnet, dass das Gewichtsverhältnis 2 : 1 bis 4,3 : 1 beträgt.

Europäisches Patentamt

# EUROPÄISCHER RECHERCHENBERICHT

0229966

Nummer der Anmeldung

EP 86 11 7003

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 817 662 (KUMIAI CHEMICAL INDUSTRY) * Seite 3, Zeile 10 - Seite 4, Zeile 3; Patentansprüche * & CH-A-509 747 (Kat. D,A) | 1-9 | A 01 N 47/12 // (A 01 N 47/12 A 01 N 43:56 ) |
| D,A | US-A-4 392 883 (S. IORI et al.) * Patentansprüche * | 1-9 | |
| D,A | DE-A-2 742 583 (BAYER AG) * Seite 12, Zeilen 16-22; Seite 17, Zeile 11 - Seite 18, Zeile 5; Patentansprüche * | 1-9 | |
| A | EP-A-0 150 529 (STAUFFER) * Seite 7, Zeilen 16-24; Patentansprüche * | 1-9 | RECHERCHIERTE SACHGEBIETE (Int. Cl.4) |
| A | EP-A-0 049 760 (BAYER) * Seite 57, Verbindung 37; Patentansprüche 1,2,4-6 * | 1-9 | A 01 N |

Der vorliegende Recherchenbericht wurde für alle Patentansprüche erstellt.

| Recherchenort | Abschlußdatum der Recherche | Prüfer |
|---|---|---|
| DEN HAAG | 06-04-1987 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82